Europäisches Patentamt

European Patent Office

Office européen des brevets

(11) Veröffentlichungsnummer: **0 282 810**
A2

## (12) EUROPÄISCHE PATENTANMELDUNG

(21) Anmeldenummer: 88103115.7

(22) Anmeldetag: 02.03.88

(51) Int. Cl.4: **G21C 19/46**

(30) Priorität: 18.03.87 DE 3708751

(43) Veröffentlichungstag der Anmeldung:
21.09.88 Patentblatt 88/38

(84) Benannte Vertragsstaaten:
DE FR GB

(71) Anmelder: **Kernforschungszentrum Karlsruhe GmbH**
**Weberstrasse 5 Postfach 3640**
**D-7500 Karlsruhe 1(DE)**

(72) Erfinder: **Hadi Ali, Sameh Abdel, Dr.**
**Zellmarkstrasse 7**
**D-7505 Ettlingen(DE)**
Erfinder: **Berndt, Uwe**
**Auf der Mühlhecke 25**
**D-7519 Gondelsheim(DE)**

(54) Verfahren zur nassen Auflösung von Uran-Plutonium-Mischoxid-Kernbrennstoffen.

(57) Die Erfindung betrifft ein Verfahren zur nassen Auflösung von Uran-Plutonium-Mischoxid-Kernbrennstoffen.

Mit der Erfindung soll ein solches Verfahren geschaffen werden, welches die bisher zu minimierenden Korrosionsprobleme vermeidet, die Abgasbehandlung vereinfacht und den Aufwand in Bezug auf die hierfür benötigte Anlage, Verfahrensweise und Kosten stark verringert.

Dies wird erfindungsgemäß dadurch erreicht, daß der Kernbrennstoff mit einer wäßrigen $HCO_3^-$-Ionen oder $HCO_3^-$-Ionen und $CO_3^{--}$-Ionen enthaltenden Lösung ohne oder mit einer oxidierenden, gelösten Lösungshilfe behandelt wird.

EP 0 282 810 A2

## Verfahren zur nassen Auflösung von Uran-Plutonium-Mischoxid-Kernbrennstoffen

Die Erfindung betrifft ein Verfahren zur nassen Auflösung von Uran-Plutonium-Mischoxid-Kernbrennstoffen.

Das bisher günstigste Auflöseverfahren für Uran-Plutonium-Mischoxid-Kernbrennstoffe, insbesondere von bestrahlten Kernbrennstoffen, ist die Auflösung in Salpetersäure. Die Anwendung anderer Mineralsäuren, wie z. B. Salzsäure oder Schwefelsäure, scheitert aufgrund der erheblich höheren Korrosivität dieser Reagenzien auf die Behältermaterialien. Trotzdem weist das Auflösungsverfahren in Salpetersäure folgende Nachteile auf:

- Zwingende Notwendigkeit einer aufwendigen Abgasbehandlungsanlage; so müssen die beim Löseprozeß freigesetzten flüchtigen Spaltprodukte wie Jod und Krypton vor ihrer Rückhaltung von den begleitenden Stickoxiden $NO_X$ befreit werden, ein Umstand, der beträchtliche Anlagenkosten mit sich bringt.

- Die hohe Flüchtigkeit von elementarem Jod und Jodwasserstoff bei der sauren Auflösung; dies führt zu einer zusätzlichen Komplizierung der Jod-Separationsmaßnahmen.

- Hohe Qualitätsanforderungen an die Anlagematerialien; hier muß die Gefahr einer korrosionsbedingten Anlage-Komponenten-Zerstörung während des z. B. heißen (radioaktiven) Betriebes durch den Einsatz hochwertiger Spezialstähle minimiert werden.

- Der Kernbrennstoff muß selektiv von den nahezu vollständig mitgelösten Aktivitätsträgern (wie z. B. Spaltprodukten oder Aktivierungsprodukten) isoliert werden.

Der Erfindung liegt daher die Aufgabe zugrunde, ein Verfahren zur nassen Auslösung von Uran-Plutonium-Mischoxid-Kernbrennstoffen zu schaffen, welches die bisher zu mini-mierenden Korrosionsprobleme vermeidet, die Abgasbehand lung wesentlich vereinfacht und den Aufwand in Bezug auf die hierfür benötigte Anlage, Verfahrensweise und Kosten stark verringert.

Die Aufgabe wird erfindungsgemäß dadurch gelöst, daß der Kernbrennstoff mit einer wäßrigen $HCO_3^-$-Ionen oder $HCO_3^-$-Ionen und $CO_3^{--}$-Ionen enthaltenden Lösung ohne oder mit einer oxidierenden, gelösten Lösungshilfe behandelt wird.

Vorteilhafterweise kann auch zusätzlich in $HCO_3^-$-Ionen und/oder $CO_3^{--}$-Ionen enthaltende Lösungen gasförmiges $CO_2$ bei Normaldruck oder erhöhtem Druck p = 200 bar eingeleitet werden.

Als oxidierende Lösungshilfe werden vorteilhafterweise Cer(IV)-Salze verwendet. Die $Ce^{4+}$-Ionen werden in einer Menge der wäßrigen Lösung zugesetzt, die einem Mol-Verhältnis $Ce^{4+}$-Ionen zu Uranionen in der Lösung im Bereich 1:100 bis 10:100 entspricht. Besonders günstig ist es, wenn das während der oxidierenden Wirkung des Cer(IV) entstehende Cer(III) durch ein weiteres, einfach bereitzustellendes Oxidationsmittel wie $H_2O_2$, Ozon oder durch anodische Oxidation zum Cer(IV) rückoxidiert wird. Hierbei wirkt das Cer(IV) quasi als Katalysator.

Die Konzentration der $HCO_3^-$-Ionen in der wäßrigen Lösung liegt im Bereich von 0,1 Mol/l bis zur Sättigungskonzentration und der pH-Wert der Lösung beträgt weniger als 12. Bei Anwesenheit von $HCO_3^-$- und $CO_3^{--}$-Ionen liegen die Konzentrationen dieser Ionen im Bereich von 0,1 Mol/l bis zur Sättigungskonzentration für $C_{HCO3}$ und von 0,1 Mol/l bis 2 Mol/l für $C_{CO3^{--}}$. Bei höheren Plutoniumkonzentrationen in der Lösung ist es von Vorteil, wenn zusätzlich $NO_3^-$-oder $Cl^-$-Ionen in einer Konzentration von 0,01 Mol/l bis 2 Mol/l zu $Ce^{4+}$-Ionen oder zu $H_2O_2$ als Lösungshilfe verwendet werden. $H_2O_2$ wird als Lösungshilfe in einer Konzentration von 0,1 Mol/l bis zum 30-fachen, bezogen auf die Molarität der Schwermetalle (Uran + Plutonium) in der Lösung, verwendet. Die durch die Anwendung von $H_2O_2$ gebildeten Peroxospezies des Urans und des Plutoniums können in der Wärme bzw. an bekannten $H_2O_2$-Zerstörungskatalysatoren in die peroxofreien Komplexe überführt werden. Der Auflösevorgang wird bei einer Temperatur im Bereich von 20° C bis 60° C durchgeführt. Bei der Verwendung von Cer(IV)-Salzen können evtl. auftretende Cer-Ausfällungen vermieden werden, wenn als zusätzliche Lösungshilfe ein Zusatz eines Komplexbildners aus der Gruppe Äthylendiamintetraessigsäure (EDTA), Äthylendiaminpentaessigsäure (DTPA) und Nitrilotriessigsäure (NTA) verwendet werden. Die Komplexbildner werden in einer Menge zugegeben, die einer Konzentration im Bereich von 0,01 Mol/l bis 0,2 Mol/l in der wäßrigen Lösung entspricht.

Bei der Auflösung von Uranerzen wurde zwar ein alkalisches Medium bzw. eine wäßrige Lösung mit $HCO_3^-$-und $CO_3^{--}$-Ionen bereits verwendet und dabei Sauerstoff und $H_2O_2$ als Oxidationsreagenzien eingesetzt (J. B. Hiskey, Trans. Inst. Min. Metall., Sec. C, 89, (1980), p. 145-152), doch wurde dieses Verfahren bzw. die Verwendung von $H_2O_2$ allein als Lösungshilfe für Uran-Plutonium-Mischoxid-Kernbrennstoffe nicht verwendet, da aufgrund der Bildung schwerlöslicher Pu-peroxo-Verbindungen ( M.S.

Milyokova, N.I. Gusev, I.G. Sentyurin, I. S. Sklyarenko, "Analytical Chemistry of Plutonium", Acad. of Sc. of the U.S.S.R., Israel Prog. for Sc. Trans., Jerusalem, (1967)) keine weitgehende, befriedigende Plutonium-Auflösung erzielt werden konnte. Da die Peroxo-Komplexe bei dem nachfolgend durchzuführenden Konzentierungsschritt an einem organischen Ionenaustauscher explosionsartig zersetzt werden können, ist eine H₂O₂-Zerstörung bzw. die Zerstörung der Peroxo-Komplexe nach der Auflösung des Kernbrennstoffs unbedingt erforderlich. Die Zerstörung dieser Stoffe führt aber zur Bildung von Kernbrennstoffniederschlägen, was der erwünschten vollständigen Auflösung oder nahezu vollständigen Auflösung der Kernbrennstoffe entgegen wirkt. Das erfindungsgemäße Verfahren vermeidet diese Nachteile, insbesondere die Gegenwart von Cer(IV)-Ionen im genannten Medium. Die zusätzliche Anwendung von Ozon schließt die Bildung explosiver Peroxo-Spezies aus. Eine Stabilisierung des Löseverhaltens des Plutoniums im Konzentrationsbereich über 200 mg/l wird durch die Anwesenheit komplexierender Agentien wie $NO_3^-$-bzw. $Cl^-$-Ionen sowie organischer Komplexbildner erzielt.

Das erfindungsgemäße Verfahren bringt u. a. bei der Auflösung bestrahlter Kernbrennstoffe bzw. bei der Auflösung von Brennstoffen, welche einen gewissen Anteil an radioaktivstrahlenden Stoffen aufweisen, folgende Vorteile mit sich:
- Hohe Dekontamination des Brennstoffs bereits während der Auflösung.
- Karbonatlösungen sind nicht korrosiv sowie extrem strahlenresistent.
- Der Hauptanteil von Spaltprodukten, wie die Lanthaniden, Ruthenium, Zirkonium und die Transplutoniumelemente verbleiben als unlöslicher Rückstand.
- Eine nachgeschaltete chromatographische Reinigung zu einer weiteren wirksamen Dekontamination der Prozeßlösung wird ermöglicht.
- Die abschließende Konzentrierung des Kernbrennstoffs an einem Ionenaustauscher, wie z. B. an Bio-Rex5, wodurch eine zusätzliche Reinigung von kationischen Aktivitätsträgern erfolgen kann, wird ermöglicht.
- Nach der dem erfindungsgemäßen Verfahren direkt folgenden Sorption der Uran-Plutonium-Karbonatokomplexe auf einem Ionenaustauscher können Uran und Plutonium mit Hilfe von Salpetersäure eluiert werden und das salpetersaure Eluat kann ohne zusätzlichen Aufwand direkt der Feinstreinigung beispielsweise im PUREX-Prozeß zugeführt werden.

Im folgenden wird die Erfindung anhand der Beschreibung einiger Durchführungsbeispiele näher erläutert.

Als Hydrogenkarbonat-und Karbonat-Salze können allgemein Alkalimetallhydrogenkarbonate und Alkalimetallkarbonate sowie Ammoniumhydrogenkarbonat und Ammoniumkarbonat verwendet werden. In der nachstehenden Tabelle sind die Durchführungsbeispiele 1 bis 10 aufgeführt, wobei die maximal vorgewählten Plutonium-Anteile im Brenstoff den z. Z. üblichen Plutoniumgehalten in Brennelementen von Leistungsreaktoren entsprechen (4 Gew.-% PuO₂ im Brennstoff). Es können jedoch auch Brennstoffe mit höherem PuO₂-Anteil aufgelöst wer den, wie z. B. ein Brennstoff mit 10 Gew.-% PuO₂, doch erhält man in einem solchen Falle einen geringen Rückstand von ca. 2 Gew.-%.

| Beispiel Nr. | Gew.-% $UO_2$ Gew.-% $PuO_2$ | Ansatz | Lösungsmittel | Temperatur | Zeit | Rückstand in Gew.-% |
|---|---|---|---|---|---|---|
| 1 | 99,0 1,0 | 100mg/20ml | 1,0M $KHCO_3$ 0,5M $K_2CO_3$ | 40° C | 10 Std. | 0 |
| 2 | 98,0 2,0 | 100mg/20ml | 1,0M $KHCO_3$ 0,5M $K_2CO_3$ | 40° C | 10 Std. | 0 |
| 3 | 96,0 4,0 | 100mg/20ml | 1,0M $KHCO_3$ 0,5M $K_2CO_3$ | 40° C | 24 Std. | 0 |
| 4 | 96,0*) 4,0 | 100mg/20ml | 1,0M $KHCO_3$ 0,5M $K_2CO_3$ | 40° C | 8 Std. | 0 |
| 5 | 99,5 0,5 | 100mg/20ml | 0,67M $NaHCO_3$ 0,33M $Na_2CO_3$ 0,002M $Ce(NO_3)_4$ Ozon | 40° C | 10 Std. | 0 |
| 6 | 96,0 4,0 | 100mg/20ml | 2,0M $KHCO_3$ 0,002M $Ce(NO_3)_4$ Ozon | 40° C | 24 Std. | 0,1 % |

| | | | | | | |
|---|---|---|---|---|---|---|
| 7 | 96,0*) <br> 4,0 | 100mg/20ml | 2,0M $KHCO_3$ <br> 0,002M $Ce(NO_3)_4$ <br> Ozon | 40° C | 3 Std. | 0,1 % |
| 8 | 96,0 <br> 4,0 | 1,0g/20 ml | 1,0M $KHCO_3$ <br> 0,5M $K_2CO_3$ <br> $H_2O_2$ | 40° C | 1 Std. | klar gelöst, nach $H_2O_2$-Vertreibung Pu-Ausfällung. Pu-Gehalt: 200mg/l |
| 9. | 96,0 <br> 4,0 | 500mg/20ml | 1,0M $KHCO_3$ <br> 0,5M $K_2CO_3$ <br> $H_2O_2$+0,1M $KNO_3$ | 40° C | 15 Min. | 0,1 % nach $H_2O_2$ Austreibung |
| 10. | 96,0 <br> 4,0 | 500mg/20ml | 1,0M $KHCO_3$ <br> 0,5M $K_2CO_3$ <br> $H_2O_2$+0,1M KCl | 40° C | 15 Min. | 0,1 % nach $H_2O_2$-Austreibung |

*) oxidiert an der Luft bei 500° C (vor der Auflösung)

Wie aus den in der Tabelle aufgeführten Ergebnissen hervorgeht, bewirken die Chlorid-und Nitrat-Zusätze eine Erhöhung der Stabilität des aufgelösten Plutoniums (eine Plutoniumausfällung wird vermieden) und leisten einen wesentlichen Beitrag zur Beschleunigung der Auflösung des Mischoxids. Die jeweiligen Grenzkonzentrationen für die $HCO_3^-$-$CO_3^{--}$-Verhältnisse werden von der Menge und der Zusammensetzung des Kernbrennstoffs bestimmt. Auflösungen in reinen $HCO_3^-$-Lösungen sind möglich. Die Anwendung eines reinen $Na_2CO_3$-Mediums erlaubt jedoch aufgrund des erhöhten pH-Wertes nur eine sehr geringe Auflösung, weshalb pH-Werte von größer als 12 in der Lösung durch $HCO_3^-$-Zusatz verhindert werden müssen. Die optimalen Auflösetemperaturen bei dieser basischen Auflösung liegen zwischen 20° C und 60° C. Niedrigere oder höhere Temperaturen würden zu Einbußen in der Reaktionskinetik bzw. bei Vorhandensein von $H_2O_2$ zur Beschleunigung der $H_2O_2$-Zersetzung führen und, im Falle der Cer-Salze, zur Gefahr der Hydrolyse dieser Salze.

**Ansprüche**

1. Verfahren zur nassen Auflösung von Uran-Plutonium-Mischoxid-Kernbrennstoffen, dadurch gekennzeichnet, daß der Kernbrennstoff mit einer wäßrigen $HCO_3^-$-Ionen oder $HCO_3^-$-Ionen und $CO_3^{--}$-Ionen enthaltenden Lösung ohne oder mit einer oxidierenden, gelösten Lösungshilfe behandelt wird.

2. Verfahren nach Anspruch 1, dadurch gekennzeichnet, daß zusätzlich in $HCO_3^-$-Ionen und/oder $CO_3^{--}$-Ionen enthaltende Lösungen gasförmiges $CO_2$ bei Normaldruck oder erhöhtem Druck $p \leq 200$ bar eingeleitet wird.

3. Verfahren nach Anspruch 1, dadurch gekennzeichnet, daß als Lösungshilfe Cer(IV)-salze verwendet werden.

4. Verfahren nach Anspruch 2, dadurch gekennzeichnet, daß $Ce^{4+}$-Ionen in einer Menge der wäßrigen Lösung zugesetzt werden, die einem Molverhältnis $Ce^{4+}$-Ionen zu Uranionen in der Lösung im Bereich 1:100 bis 10:100 entspricht.

5. Verfahren nach Anspruch 1, dadurch gekennzeichnet, daß als Lösungshilfe Cer(IV)-salze und $H_2O_2$ verwendet werden.

6. Verfahren nach Anspruch 1, dadurch gekennzeichnet, daß als Lösungshilfe Cer(IV)-salze und Ozon verwendet werden.

7. Verfahren nach Anspruch 2, dadurch gekennzeichnet, daß das während des Auflösevorgangs des Kernbrennstoffs in seinem Oxidationszustand reduzierte Cer mit Hilfe anodischer Oxidation wieder in den 4-wertigen Zustand rückoxidiert wird.

8. Verfahren nach Anspruch 1, dadurch gekennzeichnet, daß die Konzentration der $HCO_3^-$-Ionen in der wäßrigen Lösung im Bereich von 0,1 Mol/l bis zur Sättigungskonzentration liegt und der pH-Wert der Lösung weniger als 12 beträgt.

9. Verfahren nach Anspruch 1, dadurch gekennzeichnet, daß bei Anwesenheit von $HCO_3^-$-und $CO_3^{--}$-Ionen die Konzentrationen dieser Ionen im Bereich von 0,1 Mol/l bis zur Sättigungskonzentration für $c_{HCO3}$- und von 0,1 Mol/l bis 2 Mol/l für $c_{CO3}$-liegen.

10. Verfahren nach Anspruch 1, dadurch gekennzeichnet, daß als Lösungshilfe zusätzlich zu $Ce^{4+}$-Ionen $NO_3^-$-oder $Cl^-$-Ionen in einer Konzentration von 0,01 Mol/l bis 2 Mol/l verwendet werden.

11. Verfahren nach Anspruch 1, dadurch gekennzeichnet, daß als Lösungshilfe $H_2O_2$ in einer Konzentration von 0,1 Mol/l bis zum 30-fachen, bezogen auf die Molarität der Schwermetalle (Uran + Plutonium) in der Lösung, und $NO_3^-$-Ionen oder $Cl^-$-Ionen in einer Konzentration von 0,01 Mol/l bis 2 Mol/l verwendet werden.

12. Verfahren nach einem der voranstehenden Ansprüche, dadurch gekennzeichnet, daß der Auflösevorgang bei einer Temperatur im Bereich von 20° C bis 60° C durchgeführt wird.

13. Verfahren nach einem der voranstehenden Ansprüche, dadurch gekennzeichnet, daß als zusätzliche Lösungshilfe ein Zusatz eines Komplexbildners aus der Gruppe
Äthylendiamintetraessigsäure (EDTA),
Äthylendiaminpentaessigsäure (DTPA) und
Nitrilotriessigsäure (NTA)
verwendet wird.